# EUROPÄISCHE PATENTSCHRIFT

(11) **EP 1 896 216 B1**
(45) Veröffentlichungstag und Bekanntmachung des Hinweises auf die Patenterteilung: **12.05.2010**
(21) Anmeldenummer: 07722029.1
(22) Anmeldetag: 14.03.2007
(51) Int. Cl.: B23K 20/02, B23K 13/01, F01D 5/30

(54) **BAUTEIL UND VERFAHREN ZUM VERBINDEN VON METALLISCHEN BAUELEMENTEN**
COMPONENT AND METHOD FOR JOINING METAL ELEMENTS
PIÈCE ET PROCÉDÉ POUR RELIER DES ÉLÉMENTS STRUCTURELS MÉTALLIQUES

(30) Priorität: 20.03.2006 DE 102006012660
(43) Veröffentlichungstag der Anmeldung: 12.03.2008
(73) Patentinhaber: MTU Aero Engines GmbH, 80995 München (DE)
(72) Erfinder: HANRIEDER, Herbert, 85411 Hohenkammer (DE); GINDORF, Alexander, 85247 Schwabhausen (DE); MEIER, Reinhold, 84405 Dorfen (DE)
(86) Internationale Anmeldenummer: PCT/DE2007/000456
(87) Internationale Veröffentlichungsnummer: WO 2007/107144

(56) Entgegenhaltungen:
- EP-A- 1 516 690
- WO-A-00/03834
- FR-A1- 2 629 133

## Beschreibung

Die vorliegende Erfindung betrifft ein Bauteil, insbesondere Bauteil einer Gasturbine, bestehend aus mindestens zwei metallischen Bauelementen,
wobei das erste Bauelement eine erste Verbindungsfläche und das zweite Bauelement eine zweite Verbindungsfläche aufweist und die Bauelemente über ihre Verbindungsflächen mittels einem induktiven Hochfrequenzpressschweißen verbunden sind. Die Erfindung betrifft weiterhin ein Verfahren zum Verbinden von metallischen Bauelementen, insbesondere von Bauelementen einer Gasturbine, wobei das Verbinden entsprechender Verbindungsflächen der Bauelemente mittels eines induktiven Hochfrequenzpressschweißens erfolgt.

Aus dem Stand der Technik sind verschiedene Verfahren zum Verbinden von metallischen Bauelementen mittels induktivem Hochfrequenzpressschweißens bekannt. So beschreibt zum Beispiel die DE 198 58 702 A1 ein Verfahren zum Verbinden von Schaufelteilen einer Gasturbine, wobei ein Schaufelblattabschnitt und wenigstens ein weiteres Schautelteil bereitgestellt werden. Dabei werden entsprechende Verbindungsflächen dieser elemente im Wesentlichen fluchtend beabstandet.zueinander positioniert und anschließend durch Erregen eines Induktors mit hochfrequentem Strom und durch Zusammenfahren unter Berührung ihrer Verbindungsflächen miteinander verschweißt. Dabei wird der Induktor mit einer konstanten Frequenz, die im Allgemeinen über 0,75 MHz liegt, erregt. Die Frequenz wird zudem in Abhängigkeit von der Geometrie der Verbindungsflächen gewählt. Bei dem induktiven Hochfrequenzpressschweißen ist die gleichzeitige und homogene Erwärmung der beiden Schweißpartner für die Qualität der Fügestelle von entscheidender Bedeutung. Zudem muss eine gleichmäßige Aufstauchung des Fügebereichs sichergestellt werden, um eine fehlerfreie Schweißverbindung zu erreichen. Nachteilig an den bekannten Verfahren ist jedoch, dass gerade die letztgenannte Bedingung nur sehr schwer oder nicht erfüllt wird. Damit kann auch nicht immer die notwendige Qualität der resultierenden Bauteile und insbesondere der Fügestellen dieser Bauteile erreicht werden.

Es ist daher Aufgabe der vorliegenden Erfindung ein gattungsgemäßes Bauteil bereitzustellen, bei dem einerseits eine sichere und dauerhafte Verbindung der einzelnen Bauelemente zueinander und andererseits eine hohe Qualität der Fügestellen zwischen den Bauelementen gewährleistet sind.

Es ist weiterhin Aufgabe der vorliegenden Erfindung ein gattungsgemäßes Verfahren zum Verbinden von metallischen Bauelementen bereitzustellen, bei dem einerseits eine sichere und dauerhafte Verbindung von Bauelementen und andererseits eine hohe Qualität der Fügestellen zwischen den Bauelementen gewährleistet sind.

Gelöst werden diese Aufgaben durch ein Bauteil gemäß den Merkmalen des Anspruch 1 sowie ein Verfahren gemäß den Merkmalen des Anspruchs 11.

Zur Klarstellung sei hier ausdrücklich erwähnt, dass die Bezeichnung induktives Hochfrequenzpressschweißen das Verfahren bzw. das Bauteil im vorliegenden Fall nicht auf einen bestimmten Frequenzbereich festlegt.
Vielmehr finden Frequenzen im niederen kHz-Bereich bis hin zum hohen MHz-Bereich Abwendung, so dass auch die neue Bezeichnung induktives Pressschweißen (IPS) eingeführt werden könnte.

Vorteilhafte Ausgestaltungen der Erfindung sind in den jeweiligen Unteransprüchen beschrieben.

Ein erfindungsgemäßes Bauteil, insbesondere ein Bauteil einer Gasturbine, besteht aus mindestens zwei metallischen Bauelementen, wobei das erste Bauelement eine erste Verbindungsfläche und das zweite Bauelement eine zweite Verbindungsfläche aufweist und die Bauelemente über ihre Verbindungsflächen mittels einem induktiven Hochfrequenzpressschweißen verbunden sind. Dabei ist eine der Verbindungsflächen derart gestaltet, dass sie gegenüber der anderen Verbindungsfläche umlaufend verbreitert ausgebildet ist, wobei eine beim Zusammenfügen der Bauelemente entstehende Aufstauchung in einem Fügebereich nahezu vollständig innerhalb und insbesondere auf einem durch die Umfangsverbreiterung der einen Verbindungsfläche ausgebildeten umlaufenden Kragen aufliegt. Durch die umlaufende Verbreiterung der einen Verbindungsfläche wird erfindungsgemäß eine gleichmäßige Aufstauchung des Fügebereichs sichergestellt, so dass eine fehlerfreie Schweißverbindung erreicht wird. Damit ist nicht nur eine sichere und dauerhafte Verbindung der einzelnen Bauelemente untereinander, sondern auch eine hohe Qualität der resultierenden Bauteile und insbesondere der Fügestellen dieser Bauteile gewährleistet. Nach einer gegebenenfalls notwendigen Endbearbeitung ist durch die gleichmäßige Aufstauchung der Fügebereich frei von Kerben, Rissen oder anderen festigkeitsbeeinflussenden Fehlern.

Bevorzugt führt die Verbreiterung zu einer Verbindungsfläche mit im wesentlichen konstanter Breite. Hierdurch kann die Frequenz des Fügeverfahrens einfacher an den Prozess angepasst werden.

In einer vorteilhaften Ausgestaltung des erfindungsgemäßen Bauteils liegt eine Einkerbung der Aufstauchung, die in einem Übergangsbereich zu der Verbindungsfläche der Umfangsverbreiterung ausgebildet ist, außerhalb einer Nominalgeometrie der beiden Bauelemente bzw. des zusammengefugten Bauteils. Dadurch wird sichchergestellt, dass die der Aufstauchung entstehenden Einkerbungen immer außerhalb des eigentlichen Bauteils liegen, so dass auch dadurch festigkeitsbeeihflussende Fehler vermieden werden.
In einer vorteilhaften Ausgestaltung des Bauteils beträgt die Umfangsverbreiterung mindestens 0,5 mm. Die Größe der Bauteilverbreiterung bzw. des Kragens ist dabei abhängig vom Querschnitt des Bauelements bzw. der Verbindungsfläche des Bauelements. Üblicherweise beträgt bei einer Querschnittsfläche von ca. 40 mm² die Umfangsverbreiterung 0,5 mm. Bei Querschnittsflächen im Bereich von 500 mm² kann die Größe der Umfangsverbreiterung 1,0 mm oder mehr betragen.

In einer weiteren vorteilhaften Ausgestaltung des erfindungsgemäßen Bauteils ist die Umfangsverbreiterung der ersten Verbindungsfläche mechanisch durch Krafteinwirkung erzeugt. Zudem ist es möglich, dass zur Umfangsverbreiterung ein Aufsatzelement mit dem ersten Bauelement verbunden wird, wobei das Aufsatzelement eine Verbindungsfläche aufweist, die gegenüber der Verbindungsfläche des zweiten Bauelements umlaufend verbreitert ausgebildet ist. Das Aufsatzelement ist dabei mit dem ersten Bauelement üblicherweise verschweißt. Dadurch ist es möglich, dass die Bauelemente nicht nur zur Herstellung neuer Bauteile, sondern auch zur Reparatur beschädigter Bauteile unter Einbeziehung der Vorteile der vorliegenden Erfindung verwendet werden können.

In einer weiteren vorteilhaften Ausgestaltung des erfindungsgemäßen Bauteils werden während des Vorgangs des induktiven Hochfrequenzpressschweißens zur Erwärmung der Verbindungsflächen der Bauelemente mindestens zwei durch mindestens einen Induktor induzierte unterschiedliche Frequenzen verwendet. Dadurch ist eine gleichmäßige und homogene Erwärmung der unterschiedlich großen Verbindungsflächen gewährleistet. Zudem können Bauelemente miteinander verbunden werden, die aus ähnlichen oder auch unterschiedlichen metallischen Werkstoffen bestehen.

In einer vorteilhaften Ausgestaltung des erfindungsgemäßen Bauteils ist das zweite Bauelement eine Schaufel oder ein Teil einer Schaufel eines Rotors in einer Gasturbine und das zweite Bauelement ein Ring oder eine Scheibe des Rotors oder ein am Umfang des Rings oder der Scheibe angeordneter Schaufelblattstummel. Bei diesen aus den genannten Bauelementen zusammengefügten Bauteilen handelt es sich um so genannte BLINGs ("Bladed Ring") oder BLISKs ("Bladed Disc") von Gasturbinentriebwerken.

Bei einem erfindungsgemäßen Verfahren zum Verbinden von metallischen Bauelementen, insbesondere von Bauelementen einer Gasturbine, erfolgt das Verbinden entsprechender Verbindungsflächen der Bauelemente mittels eines induktiven Hochfrequenzpressschweißens. Dabei werden die Verbindungsflächen in genügend erwärmtem Zustand aneinandergepresst und bis zur Abkühlung gehalten, wobei eine der Verbindungsflächen derart gestaltet ist, dass sie gegenüber der anderen Verbindungsfläche umlaufend verbreitert ausgebildet ist und dass eine beim Zusammenfügen der Bauelemente entstehende Aufstauchung in einem Fügebereich nahezu vollständig innerhalb und insbesondere auf einem durch die Umfangsverbreiterung der einen Verbindungsfläche ausgebildeten umlaufenden Kragen aufliegt. Das durch die Schweißung verursachte Gussgefüge wird mit dem Herauspressen der Schmelze vollständig entfernt. Dadurch ist eine sichere und dauerhafte Verbindung der Bauelemente miteinander sichergestellt. Zudem wird eine sehr hohe Qualität der Fügestelle bzw. des Fügebereichs dieser Bauteile erreicht, da eine gleichmäßige Aufstauchung des Fügebereichs möglich ist. Durch die fehlerfreie Schweißverbindung ist der Fügebereich, insbesondere nach einer möglichen Endbearbeitung, frei von Kerben, Rissen oder anderen festigkeitsbeeinflussenden Fehlern bzw. Gussgefügen. Da nur eine der Verbindungsflächen umlaufend verbreitert ausgebildet sein muss, kann das Verfahren sowohl bei der Neuteilfertigung mit größerem Aufmaß für die Endbearbeitung als auch bei der Reparatur ohne Aufmaß angewandt werden.

Bevorzugt wird die Verbindungsfläche durch die Verbreiterung zu einer Fläche mit im wesentlichen konstanter Breite verstetigt. So kann die Frequenz leichter auf die Gegebenheit angepasst werden.

In einer weiteren vorteilhaften Ausgestaltung des erfindungsgemäßen Verfahrens liegt eine durch die Aufstauchung in einem Übergangsbereich der Verbindungsfläche der Umfangsverbreiterung entstehende Einkerbung außerhalb einer Nominalgeometrie der beiden Bauelemente bzw. des Bauteils. Damit ist wiederum gewährleistet, dass nach Fertigstellung des Bauteils der Fügebereich frei von möglichen festigkeitsbeeinflussenden Fehlern ist.
Die Umfangsverbreiterung der einen Verbindungsfläche beträgt bei dem erfindungsgemäßen Verfahren mindestens 0,5 mm, wobei sich die Größe der Umfangsverbreiterung insbesondere nach dem Durchmesser oder der Querschnittsfläche der zu verbinden Verbindungsflächen richtet. So beträgt die Größe des umlaufenden Kragens bzw. der Verbreiterung bei einer Querschnittsfläche von ca. 40 mm² ungefähr 0,5 mm. Bei einer Querschnittsfläche von ungefähr 500 mm² kann die umlaufende Verbreiterung ungefähr 1,0 mm oder mehr betragen.

In weiteren vorteilhaften Ausgestaltungen des erfindungsgemäßen Verfahrens wird die Umfangsverbreiterung der ersten Verbindungsfläcne mechanisch durch Krafteinwirkung oder durch ein Aufsatzelement, welches mit dem ersten Bauelement verbunden wird und eine Verbindungsfläche aufweist, die gegenüber der Verbindungsfläche des zweiten Bauteils umlaufend verbreitert ausgebildet ist, erzeugt. Damit ist es möglich, dass das erfindungsgemäße Verfahren auch für die Reparatur von beschädigten Bauteilen eingesetzt werden kann. Beispielhaft ist hierbei die Instandsetzung von so genannten BLISKs ("Bladed Disc") und BLINGs ("Bladed Ring") genannt, bei denen ein teilweiser oder vollständiger Schaufelblattaustausch durchgeführt werden muss. Das genannte Aufsatzelement ist dabei mit dem ersten Bauelement üblicherweise verschweißt. Es können dabei unterschiedliche Schweißarten, wie zum Beispiel das Stichlochschweißen oder das Laserschweißen, Verwendung finden. Bei den beschriebenen Einsatzbereichen des erfindungsgemäßen Verfahrens ist das zweite Bauelement eine Schaufel oder ein Teil einer Schaufel eines Rotors in einer Gasturbine und das erste Bauelement ein Ring oder eine Scheibe des Rotors oder ein am Umfang des Rings oder der Scheibe angeordneter Schaufelblattstummel.

In einer weiteren vorteilhaften Ausgestaltung des erfindungsgemäßen Verfahrens werden während des Vorgangs des induktiven Hochfrequenzpressschweißens zur Erwärmung der Verbindungsflächen der Bauelemente mindestens zwei durch mindestens einen Induktor induzierte unterschiedliche Frequenzen verwendet. Damit ist eine gleichmäßige und homogene Erwärmung der unterschiedliche Querschnittsflächen aufweisenden Verbindungsflächen gewährleistet. Dies führt zu einer sicheren und dauerhaften Verbindung der beiden Bauelemente.

Weitere Vorteile, Merkmale und Einzelheiten der Erfindung ergeben sich aus der nachfolgenden Beschreibung zweier zeichnerisch dargestellter Ausführungsbeispiele. Dabei zeigen
Figur 1 eine Darstellung eines Schliffs durch einen Fügebereich eines erfindungsgemäßen Bauteils gemäß einer ersten Ausführungsform; und
Figur 2 eine schematische Darstellung eines Teils eines erfindungsgemäßen Bauteils gemäß einer zweiten Ausführungsform.

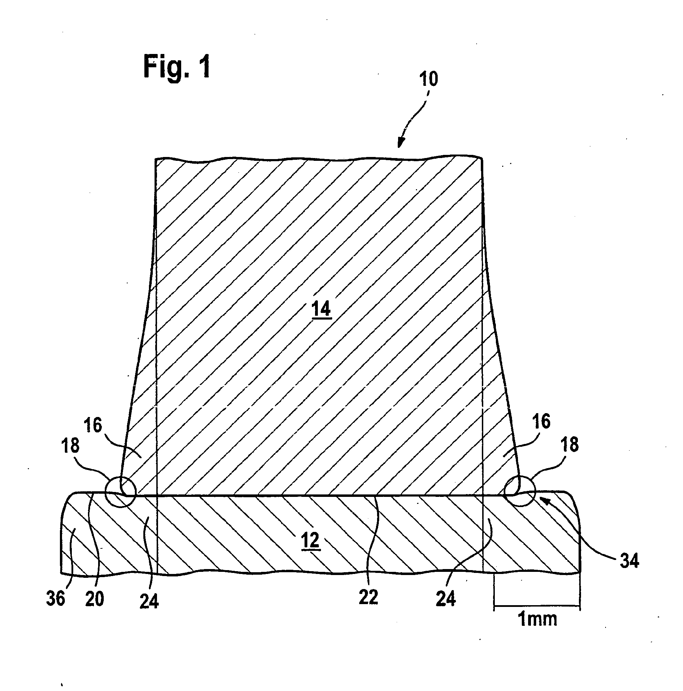

Figur 1 zeigt einen Schliff durch einen Fügebereich 34 eines Bauteils 10. Man erkennt, dass das Bauteil 10 aus einem ersten Bauelement 12 und einem zweiten Bauelement 14 besteht, die über ihre Verbindungsflächen 20, 22 mittels eines induktiven Hochfrequenzpressschweißens miteinander verbunden werden sind. Dabei ist die erste Verbindungsfläche 20 derart- gestaltet, dass sie gegenüber der zweiten Verbindungsfläche 22 umlaufend verbreitert ausgebildet ist und dadurch einen Kragen bzw. eine umlaufende Verbreiterung 36 ausbildet. Zudem erkennt man, dass eine durch das Zusammenfügen der Bauelemente 12, 14 ausgebildete Aufstauchung 16 in einem Fügebereich 34 vollständig innerhalb und insbesondere auf dem durch die Umfangsverbreiterung der ersten Verbindungsfläche 20 ausgebildeten umlaufenen Kragen 36 aufliegt. Die Aufstauchung 16 weist dabei in einem Übergangsbereich zu der Verbindungsfläche 20 mit der Umfangsverbreiterung bzw. dem Kragen 36 eine Einkerbung 18 auf, wobei die Einkerbung 18 außerhalb einer Nominalgeometrie 24 der beiden Bauelemente 12, 14 bzw. des Bauteils 10 liegt.

Das Schliffbild zeigt deutlich die Ausgestaltung und Wirkungsweise der Verbreiterung des einen Fügepartners, nämlich des ersten Bauelements 12 bzw. der ersten Verbindungsfläche 20 des ersten Bauelements 12. Auf der umlaufenden Verbreiterung der ersten Verbindungsfläche 20 kann die Stauchung 16 der Fügung bewusst nach außen geführt.werden, so dass die beim Fügeprozess entstehende Kerbung 18 außerhalb der Nominalgeometrie 18 des Bauteils 10 liegt.

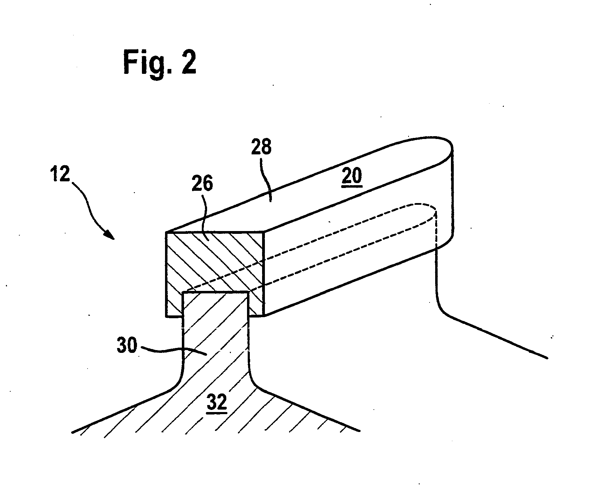

Figur 2 zeigt eine schematische Darstellung des ersten Bauelements 12 eines Bauteils 10 gemäß einer zweiten Ausführungsform. Man erkennt, dass das erste Bauteil 12 aus einem am Umfang eines Rotors 32 ausgebildeten Teilelement 30, nämlich eines Schaufelblattstummels, und einem damit verbundenen Aufsatzelement 28 besteht. Dabei ist ein Aufsatzelementkörper 26 breiter als der Schaufelblattstummel 30 ausgebildet. Zudem weist das Aufsatzelement 28 eine Verbindungsfläche 20 auf, die gegenüber der Verbindungsfläche 22 des zweiten Bauelements 14 (in diesem Ausführungsbeispiel nicht dargestellt) umlaufend verbreitert ausgebildet ist. Dabei ist das Aufsatzelement 28 mit dem Teilelement 30 des ersten Bauelements 12 verschweißt.

Durch die Ausführungsbeispiele wird deutlich, dass das erfindungsgemäße Verfahren wie auch die Bauelemente 12, 14 sowohl für die Herstellung wie auch die Reparatur von Bauteilen 10 einer Gasturbine geeignet sind.

## Patentansprüche

1. Bauteil, insbesondere Bauteil einer Gasturbine, bestehend aus mindestens zwei metallischen Bauelementen (12, 14), wobei das erste Bauelement (12) eine erste Verbindungsfläche (20) und das zweite Bauelement (14) eine zweite Verbindungsfläche (22) aufweist und die Bauelemente (12, 14) über ihre Verbindungsflächen (20, 22) mittels einem induktiven Hochfrequenzpressschweißen verbunden sind, **dadurch gekennzeichnet, dass** eine der Verbindungsflächen (20) derart gestaltet ist, dass sie gegenüber der anderen Verbindungsfläche (22) umlaufend verbreitert ausgebildet ist und dass eine beim Zusammenfügen der Bauelemente (12, 14) entstehende Aufstauchung (16) in einem Fügebereich (34) nahezu vollständig innerhalb und insbesondere auf einem durch die Umfangverbreiterung der einen Verbindungsfläche (20) ausgebildeten umlaufenden Kragen (36) aufliegt.

2. Bauteil nach Anspruch 1, **dadurch gekennzeichnet, dass** durch die umlaufende Verbreiterung die Verbindungsfläche eine im wesentlichen konstante Breite aufweist.

3. Bauteil nach Anspruch 1 oder 2, **dadurch gekennzeichnet, dass** die Aufstauchung (16) in einem Übergangsbereich zu der Verbindungsfläche (20) mit der Umfangsverbreiterung eine Einkerbung (18) aufweist und die Einkerbung (18) außerhalb einer Nominalgeometrie (24) der beiden Bauelemente (12, 14) bzw. des Bauteils (10) liegt.

4. Bauteil nach einem der vorhergehenden Ansprüche, **dadurch gekennzeichnet, dass** die Umfangsverbreiterung mindestens 0,5 mm beträgt.

5. Bauteil nach einem der vorhergehenden Ansprüche, **dadurch gekennzeichnet, dass** die Umfangsverbreiterung der ersten Verbindungsfläche (20) mechanisch durch Krafteinwirkung erzeugt ist.

6. Bauteil nach einem der Ansprüche 1 bis 4, **dadurch gekennzeichnet, dass** zur Umfangsverbreiterung ein Aufsatzelement (28) mit einem Teilelement (30) des ersten Bauelements (12) verbunden wird, wobei das Aufsatzelement (28) eine Verbindungsfläche (20) aufweist, die gegenüber der Verbindungsfläche (22) des zweiten Bauelements (14) umlaufend verbreitert ausgebildet ist.

7. Bauteil nach Anspruch 6, **dadurch gekennzeichnet, dass** das Aufsatzelement (28) mit dem Teilelement (30) des ersten Bauelements (12) verschweißt ist.

8. Bauteil nach einem der vorhergehenden Ansprüche, **dadurch gekennzeichnet, dass** während des Vorgangs des induktiven Hochfrequenzpressschweißens zur Erwärmung der Verbindungsflächen (20, 22) der Bauelemente (12, 14) mindestens zwei durch mindestens einen Induktor induzierte unterschiedliche Frequenzen verwendet werden.

9. Bauteil nach einem der vorhergehenden Ansprüche, **dadurch gekennzeichnet, dass** das erste und das zweite Bauelement (12, 14) aus unterschiedlichen oder ähnlichen metallischen Werkstoffen bestehen.

10. Bauteil nach einem der vorhergehenden Ansprüche, **dadurch gekennzeichnet, dass** das zweite Bauelement (14) eine Schaufel oder ein Teil einer Schaufel eines Rotors in einer Gasturbine ist und das erste Bauelement (12) ein Ring oder eine Scheibe (32) des Rotors oder ein am Umfang des Rings oder der Scheibe (32) angeordneter Schaufelblattstummel (30) ist.

11. Bauteil nach einem der vorhergehenden Anspruche, **dadurch gekennzeichnet, dass** das Bauteil (10) ein BLING oder BLISK ist.

12. Verfahren zum Verbinden von metallischen Bauelementen (12, 14), insbesondere von Bauelementen einer Gasturbine, wobei das Verbinden entsprechender Verbindungsflächen (20, 22) der Bauelemente (12, 14) mittels eines induktiven Hochfrequenzpressschweißens erfolgt, **dadurch gekennzeichnet, dass** die Verbindungsflächen (20, 22) in genügend erwärmten Zustand aneinandergepresst und bis zur Abkühlung gehalten werden, wobei eine der Verbindungsflächen (20) derart gestaltet ist, dass sie gegenüber der anderen Verbindungsfläche (22) umlaufend verbreitert ausgebildet ist und dass eine beim Zusammenfügen der Bauelemente (12, 14) entstehende Aufstauchung (16) in einem Fügebereich (34) nahezu vollständig innerhalb und insbesondere auf einem durch die Umfangverbreiterung der einen Verbindungsfläche (20) ausgebildeten umlaufenden Kragen (36) aufliegt.

13. Verfahren nach Anspruch 12, **dadurch gekennzeichnet, dass** die umlaufende Verbreiterung eine Verbindungsfläche mit im wesentlichen konstanter Breite erzeugt wird.

14. Verfahren nach Anspruch 12 oder 13, **dadurch gekennzeichnet, dass** die Aufstauchung (16) in einem Übergangsbereich zu der Verbindungsfläche (20) mit der Umfangsverbreiterung eine Einkerbung (18) aufweist und die Einkerbung (18) außerhalb einer Nominalgeometrie der beiden Bauelemente (12, 14) bzw. des Bauteils (10) liegt.

15. Verfahren nach einem der Ansprüche 12 bis 14, **dadurch gekennzeichnet, dass** die Umfangsverbreiterung mindestens 0,5 mm beträgt.

16. Verfahren nach einem der Ansprüche 12 bis 15, **dadurch gekennzeichnet, dass** die Umfangsverbreiterung der ersten Verbindungsfläche (20) mechanisch durch Krafteinwirkung erzeugt wird.

17. Verfahren nach einem der Ansprüche 12 bis 15, **dadurch gekennzeichnet, dass** zur Umfangsverbreiterung ein Aufsatzelement (28) mit einem Teilelement (30) des ersten Bauelements (12) verbunden wird, wobei das Aufsatzelement (28) eine Verbindungsfläche (20) aufweist, die gegenüber der Verbindungsfläche (22) des zweiten Bauelements (14) umlaufend verbreitert ausgebildet ist.

18. Verfahren nach Anspruch 17, **dadurch gekennzeichnet, dass** das Aufsatzelement (28) mit dem Teilelement (30) des ersten bauelements (12) verschweißt wird.

19. Verfahren nach einem der vorhergehenden Ansprüche, **dadurch gekennzeichnet, dass** das zweite Bauelement (14) eine Schaufel oder ein Teil einer Schaufel eines Rotors in einer Gasturbine ist und das erste Bauelement (12) ein Ring oder eine Scheibe (32) des Rotors oder ein am Umfang des Rings oder der Scheibe (32) angeordneter Schaufelblattstummel (30) ist.

20. Verfahren nach einem der Ansprüche 12 bis 19, **dadurch gekennzeichnet, dass** das Bauteil (10) ein BLING oder BLISK ist.

21. Verfahren nach einem der vorhergehenden Ansprüche, **dadurch gekennzeichnet, dass** während des Vorgangs des induktiven Hochfrequenzpressschweißens zur Erwärmung der Verbindungsflächen (20, 22) der Bauelemente (12, 14) mindestens zwei durch mindestens einen Induktor induzierte unterschiedliche Frequenzen verwendet werden.

## Claims

1. A component, in particular a component of a gas turbine, consisting of at least two metallic structural elements (12, 14), wherein the first structural element (12) has a first connecting surface (20) and the second structural element (14) has a second connecting surface (22), and the structural elements (12, 14) are connected by way of their connecting surfaces (20, 22) by means of inductive high-frequency pressure-welding, **characterised in that** one of the connecting surfaces (20) is configured in such a way that it is of circumferentially wider form than the other connecting surface (22), and **in that** an upset portion (16) which develops when the structural elements (12, 14) are joined together in a joining region (34) rests almost completely within and in particular on a circumferential collar (36) that is formed by the circumferential widening of the one connecting surface (20).

2. A component according to claim 1, **characterised in that** as a result of the circumferential widening the connecting surface has a substantially constant width.

3. A component according to claim 1 or 2, **characterised in that** the upset portion (16) has a notch (18) in a region of transition to the connecting surface (20) with the peripheral widening, and the notch (18) lies outside a nominal geometry (24) of the two structural elements (12, 14) or the component (10) respectively.

4. A component according to one of the preceding claims, **characterised in that** the peripheral widening amounts to at least 0.5 mm.

5. A component according to one of the preceding claims, **characterised in that** the peripheral widening of the first connecting surface (20) is produced mechanically by the action of force.

6. A component according to one of claims 1 to 4, **characterised in that** for the purposes of the peripheral widening an attachment element (28) is connected to a partial element (30) of the first structural element (12), with the attachment element (28) having a connecting surface (20) which is formed so that it is circumferentially wider than the connecting surface (22) of the second structural element (14).

7. A component according to claim 6, **characterised in that** the attachment element (28) is welded to the partial element (30) of the first structural element (12).

8. A component according to one of the preceding claims, **characterised in that** during the process of inductive high-frequency pressure-welding at least two different frequencies that are induced by at least one inductor are used to heat the connecting surfaces (20, 22) of the structural elements (12, 14).

9. A component according to one of the preceding claims, **characterised in that** the first and the second structural elements (12, 14) consist of different or similar metallic materials.

10. A component according to one of the preceding claims, **characterised in that** the second structural element (14) is a blade or a portion of a blade of a rotor in a gas turbine, and the first structural element (12) is a ring or a disk (32) of the rotor or a blade stump (30) that is arranged at the periphery of the ring or the disk (32).

11. A component according to one of the preceding claims, **characterised in that** the component (10) is a BLING or a BLISK.

12. A method for connecting metallic structural elements (12, 14), in particular structural elements of a gas turbine, wherein the connection of corresponding connecting surfaces (20, 22) of the structural elements (12, 14) is effected by means of inductive high-frequency pressure-welding, **characterised in that** the connecting surfaces (20, 22) are pressed against each other in a sufficiently heated state and held until there is cooling, wherein one of the connecting surfaces (20) is configured in such a way that it is of circumferentially wider form than the other connecting surface (22), and **in that** an upset portion (16) which develops when the structural elements (12, 14) are joined together in a joining region (34) rests almost completely within and in particular on a circumferential collar (36) that is formed by the peripheral widening of the one connecting surface (20).

13. A method according to claim 12, **characterised in that** the circumferential widening produces a connecting surface with a substantially constant width.

14. A method according to claim 12 or 13, **characterised in that** the upset portion (16) has a notch (18) in a region of transition to the connecting surface (20) with the peripheral widening, and the notch (18) lies outside a nominal geometry of the two structural elements (12, 14) or the component (10) respectively.

15. A method according to one of claims 12 to 14, **characterised in that** the peripheral widening amounts to at least 0.5 mm.

16. A method according to one of claims 12 to 15, **characterised in that** the peripheral widening of the first connecting surface (20) is produced mechanically by the action of force.

17. A method according to one of claims 12 to 15, **characterised in that** for the purposes of the peripheral widening an attachment element (28) is connected to a partial element (30) of the first structural element (12), with the attachment element (28) having a connecting surface (20) formed so that it is circumferentially wider than the connecting surface (22) of the second structural element (14).

18. A method according to claim 17, **characterised in that** the attachment element (28) is welded to the partial element (30) of the first structural element (12).

19. A method according to one of the preceding claims, **characterised in that that** the second structural element (14) is a blade or a portion of a blade of a rotor in a gas turbine, and the first structural element (12) is a ring or a disk (32) of the rotor or a blade stump (30) that is arranged at the periphery of the ring or the disk (32).

20. A method according to one of claims 12 to 19, **characterised in that** the component (10) is a BLING or a BLISK.

21. A method according to one of the preceding claims, **characterised in that** during the process of inductive high-frequency pressure-welding at least two different frequencies that are induced by at least one inductor are used to heat the connecting surfaces (20, 22) of the structural elements (12, 14).

## Revendications

1. Pièce, en particulier pièce d'une turbine à gaz, formée par au moins deux éléments (12, 14) métalliques, le premier élément (12) comportant une première surface d'assemblage (20) et le deuxième élément (14) comportant une deuxième surface d'assemblage (22) et les éléments (12, 14) étant assemblés l'un à l'autre par l'intermédiaire de leurs surfaces d'assemblage (20, 22) au moyen d'un soudage par pression à haute fréquence par induction, **caractérisée en ce que** l'une des surfaces d'assemblage (20) est configurée de telle sorte que, par rapport à l'autre surface d'assemblage (22), elle est élargie sur le pourtour et **en ce qu'**un refoulement (16) dans une zone de joint (34), généré pendant l'assemblage des éléments (12, 14), repose presque entièrement à l'intérieur et, en particulier, sur un collet (36) périphérique formé par l'élargissement périphérique de l'une des surfaces d'assemblage (20).

2. Pièce selon la revendication 1, **caractérisée en ce que**, par l'élargissement périphérique, la surface d'assemblage a une largeur sensiblement constante.

3. Pièce selon la revendication 1 ou 2, **caractérisée en ce que** le refoulement (16), dans une zone de transition entre la surface d'assemblage (20) et l'élargissement périphérique, comporte une gorge (18), et ladite gorge (18) se situe en dehors d'une géométrie nominale (24) des deux éléments (12, 14), plus précisément de la pièce (10).

4. Pièce selon l'une quelconque des revendications précédentes, **caractérisée en ce que** l'élargissement périphérique mesure au moins 0,5 mm.

5. Pièce selon l'une quelconque des revendications précédentes, **caractérisée en ce que** l'élargissement périphérique de la première surface d'assemblage (20) est généré mécaniquement par l'application d'une force.

6. Pièce selon l'une quelconque des revendications 1 à 4, **caractérisée en ce que** pour former l'élargissement périphérique, un élément rapporté (28) est relié à un élément partiel (30) du premier élément (12), ledit élément rapporté (28) comportant une surface d'assemblage (20) qui est réalisée de manière élargie sur le pourtour par rapport à la surface d'assemblage (22) du deuxième élément (14).

7. Pièce selon la revendication 6, **caractérisée en ce que** l'élément rapporté (28) est soudé à l'élément partiel (30) du premier élément (12).

8. Pièce selon l'une quelconque des revendications précédentes, **caractérisée en ce que**, pendant le processus de soudage par pression à haute fréquence par induction, on utilise pour le chauffage des surfaces d'assemblage (20, 22) des éléments (12, 14) au moins deux fréquences différentes induites par au moins un inducteur.

9. Pièce selon l'une quelconque des revendications précédentes, **caractérisée en ce que** le premier et le deuxième élément (12, 14) sont réalisés dans des matériaux métalliques différents ou similaires.

10. Pièce selon l'une quelconque des revendications précédentes, **caractérisée en ce que** le deuxième élément (14) est une pale ou une partie d'une pale d'un rotor dans une turbine à gaz, et le premier élément (12) est un anneau ou un disque (32) du rotor ou un bout de pale (30) disposé sur la périphérie de l'anneau ou du disque (32).

11. Pièce selon l'une quelconque des revendications précédentes, **caractérisée en ce que** la pièce (10) est un BLING ou BLISK (disque aubagé monobloc).

12. Procédé pour assembler deux éléments (12, 14) métalliques, en particulier des éléments d'une turbine à gaz, l'assemblage des surfaces d'assemblage (20, 22) correspondantes des éléments (12, 14) étant réalisé par soudage par pression à haute fréquence par induction, **caractérisé en ce que** les surfaces d'assemblage (20, 22), à l'état suffisamment chauffé, sont pressées l'une contre l'autre et sont maintenues jusqu'au refroidissement, l'une des surfaces d'assemblage (20) étant configurée de telle sorte que, par rapport à l'autre surface d'assemblage (22), elle est élargie en périphérie et qu'un refoulement (16) dans une zone de joint (34), généré pendant l'assemblage des éléments (12, 14), repose presque entièrement à l'intérieur et, en particulier, sur un collet (36) périphérique formé par l'élargissement périphérique de l'une des surfaces d'assemblage (20).

13. Procédé selon la revendication 12, **caractérisé en ce que** l'élargissement périphérique génère une surface d'assemblage avec une largeur sensiblement constante.

14. Procédé selon la revendication 12 ou 13,
**caractérisé en ce que** le refoulement (16), dans une zone de transition entre la surface d'assemblage (20) et l'élargissement périphérique, comporte une gorge (18), et ladite gorge (18) se situe en dehors d'une géométrie nominale (24) des deux éléments (12, 14), plus précisément de la pièce (10).

15. Procédé selon l'une quelconque des revendications 12 à 14, **caractérisé en ce que** l'élargissement périphérique mesure au moins 0,5 mm.

16. Procédé selon l'une quelconque des revendications 12 à 15, **caractérisé en ce que** l'élargissement périphérique de la première surface d'assemblage (20) est généré mécaniquement par l'application d'une force.

17. Procédé selon l'une quelconque des revendications 12 à 15, **caractérisé en ce que** pour former l'élargissement périphérique, un élément rapporté (28) est relié à un élément partiel (30) du premier élément (12), ledit élément rapporté (28) comportant une surface d'assemblage (20) qui est réalisée de manière élargie sur le pourtour par rapport à la surface d'assemblage (22) du deuxième élément (14).

18. Procédé selon la revendication 17, **caractérisé en ce que** l'élément rapporté (28) est soudé à l'élément partiel (30) du premier élément (12).

19. Procédé selon l'une quelconque des revendications précédentes, **caractérisé en ce que** le deuxième élément (14) est une pale ou une partie d'une pale d'un rotor dans une turbine à gaz, et le premier élément (12) est un anneau ou un disque (32) du rotor ou un bout de pale (30) disposé sur la périphérie de l'anneau ou du disque (32).

20. Procédé selon l'une quelconque des revendications 12 à 19, **caractérisé en ce que** la pièce (10) est un BLING ou BLISK (disque aubagé monobloc).

21. Procédé selon l'une quelconque des revendications précédentes, **caractérisé en ce que**, pendant le processus de soudage par pression à haute fréquence par induction, on utilise pour le chauffage des surfaces d'assemblage (20, 22) des éléments (12, 14) au moins deux fréquences différentes induites par au moins un inducteur.
